Europäisches Patentamt

European Patent Office

Office européen des brevets

(19)

(11) Veröffentlichungsnummer: **0 242 321**
**B1**

(12) # EUROPÄISCHE PATENTSCHRIFT

(45) Veröffentlichungstag der Patentschrift:
**28.06.89**

(51) Int. Cl.⁴: **G02B 21/22, A61B 3/12**

(21) Anmeldenummer: **87810107.0**

(22) Anmeldetag: **24.02.87**

(54) Stereo-Mikroskop.

(30) Priorität: **14.03.86 CH 1060/86**

(43) Veröffentlichungstag der Anmeldung:
**21.10.87 Patentblatt 87/43**

(45) Bekanntmachung des Hinweises auf die Patenterteilung:
**28.06.89 Patentblatt 89/26**

(84) Benannte Vertragsstaaten:
**CH DE ES FR GB IT LI**

(56) Entgegenhaltungen:
**EP-A- 0 090 982**
**CH-A- 399 771**
**US-A- 3 173 984**

(73) Patentinhaber: **HAAG-STREIT AG Werkstätten für Präzisionsmechanik, Hess-Strasse 27, CH-3097 Liebefeld(CH)**

(72) Erfinder: **Papritz, Franz, Haltenstutz 44, CH-3145 Niederscherli(CH)**
Erfinder: **Widmer, Hansruedi, Bifitstrasse 22, CH-3145 Niederscherli(CH)**

(74) Vertreter: **Steiner, Martin et al, c/o AMMANN PATENTANWAELTE AG BERN Schwarztorstrasse 31, CH-3001 Bern(CH)**

## Beschreibung

Die vorliegende Erfindung betrifft eine Stereo-Mikroskop, insbesondere für die Augenuntersuchung. Heute übliche Mikroskope dieser Art weisen einen festen Stereowinkel in der Grössenordnung von 8 bis 15°, beispielsweise 13° auf. Diese Instrumente erlauben eine stereoskopische Betrachtung der vorderen Augenabschnitte im optischen Schnitt, insbesondere unter einem Stereowinkel in der genannten Grössenordnung. Bei der Beobachtung der hinteren Augenabschnitte bedient man sich in der Regel besonderer Vorsatzgläser. Diese bewirken die Aufhebung der Brechkraft von Hornhaut und Linse und erlauben zum Teil auch die Beobachtung seitlicher Partien von Netzhaut und Glaskörper über integrierte Spiegel. Infolge der, für die Beobachtung, ungünstigen Lage der Iris bzw. Pupille werden Teile der beiden Beobachtungsstrahlenbündel abgeschnitten. Bei ungenügender Weite der Pupille, starker Myopie, und bei seitlicher Beobachtung peripherer Fundus- und Glaskörperabschnitte kann eine binokulare stereoskopische Beobachtung des optischen Schnittes schwierig oder unmöglich werden, weil das binokulare Sehfeld sehr klein wird. Es kann dann nur eine monokulare Beobachtung des optischen Schnittes oder eine binokulare Ophtalmoskopie bei fokaler Beleuchtung ausgeführt werden.

Zur Verbesserung der Voraussetzungen zur Untersuchung oder Operation, insbesondere am Auge, sind schon Stereo-Mikroskope gemäss Oberbegriff des Anspruchs 1 bzw. des Anspruchs 3 vorgeschlagen worden. Ein Mikroskop dieser Art ist aus der CH-A-399 771 bekannt, bei welchem in jedem Teil-Strahlenbündel um eine zur optischen Achse der Teil-Strahlenbündel parallele Achse drehbarer, reflektierender optischer Körper zugeordnet ist, der das Teil-Strahlenbündel seitlich versetzt. Bei koordinierter Drehung der beiden optischen Körper verändert sich der Stereo winkel je nach Stellung der Körper. Diese Ausführung ist mit erheblichen Nachteilen verbunden. Es sind zwei getrennte, drehbare Träger für die optischen Körper vorzusehen, die über geeignete Getriebe von aussen gedreht werden können. Die Lagerung der Träger zur Drehung um zu den optischen Achsen der Strahlenbündel parallele Achsen im Tubusinneren ist aufwendig. Bezogen auf die Lichtstärke beansprucht die Ausführung viel Raum, und die Freiheit in der Wahl der Stereowinkel ist beschränkt.

Aufgabe der vorliegenden Erfindung ist es, ein verbessertes Stereo-Mikroskop anzugeben. Zwei Lösungen der Aufgabe sind im Kennzeichen des Anspruchs 1 bzw. des Anspruchs 3 umschrieben.

Diese Lösung erlaubt einen kompakten Aufbau mit einer besonders günstigen Relation zwischen Aufwand an Material und Platz, Lichtstärke und Bedienungsfreundlichkeit. Es liegen insbesondere günstige Voraussetzungen vor, um einen besonderen Teil oder Modul als Stereo-Wechsler zu schaffen, der nach Belieben eingebaut werden kann oder nicht, wobei auch eine Nachrüstung bestehender Mikroskope möglich ist.

Die Erfindung wird nun anhand eines Ausführungsbeispiels und von Ausführungsvarianten des erfindungsgemässen Mikroskops sowie einiger Anwendungsbeispiele näher erläutert.

Fig. 1 und 2 zeigen schematisch die Optik des Mikroskops in zwei verschiedenen Einstellungen mit grossem und kleinem Stereowinkel $\alpha$,

Fig. 3 und 4 zeigen den Aufbau eines Stereowinkel-Wechslers ausgeführt als Bestandteil oder Modul des Mikroskops in Stirnansicht bzw. im Schnitt nach Linie IV-IV in Fig. 3, teilweise in Ansicht,

Fig. 5 und 6 zeigen die Betrachtungsverhältnisse am Patientenauge bei kleinem bzw. grossem Stereowinkel und

Fig. 7 und 8 zeigen schematisch Ausführungsvarianten.

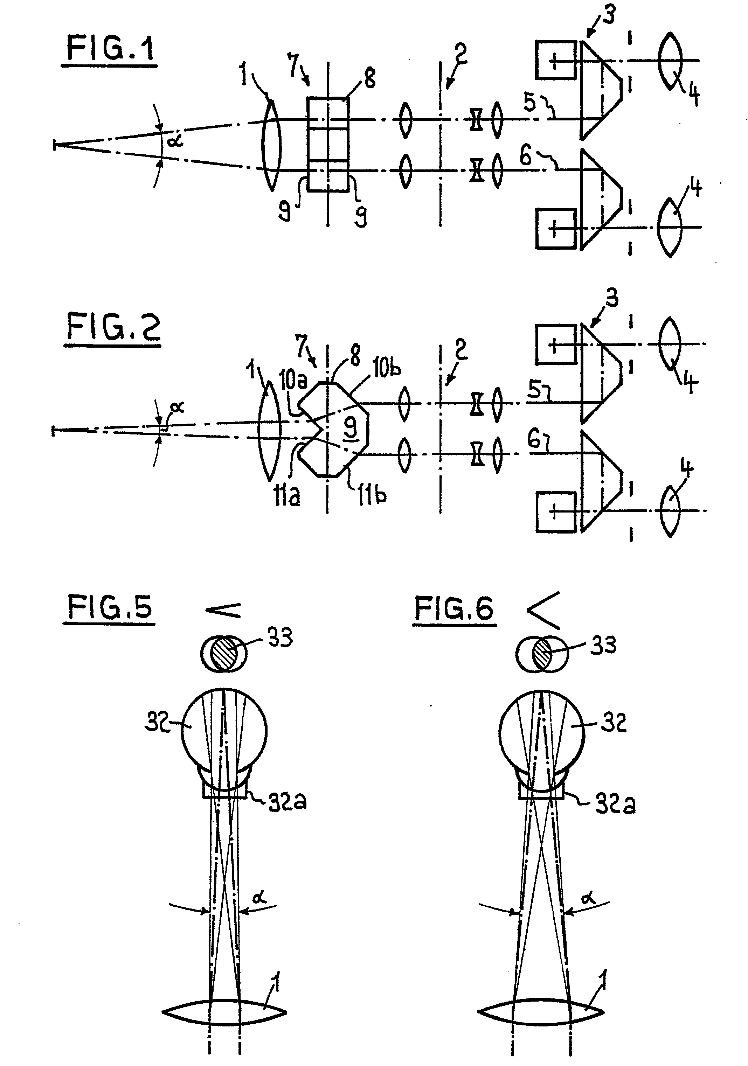

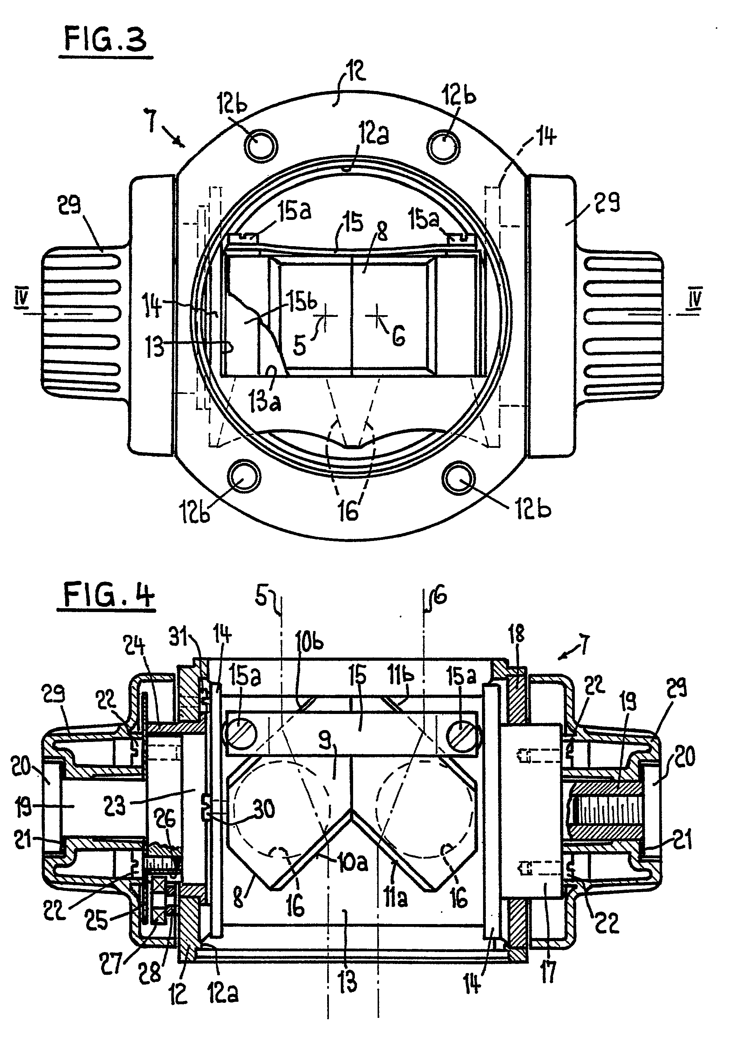

Die in den Figuren 1 und 2 dargestellte Optik weist die an sich üblichen Elemente auf, nämlich ein Frontobjektiv 1, einen Vergrösserungswechsler 2, einen Binokulartubus 3 und Okulare 4. Diese Elemente 1 bis 4 und ihre Funktion sind an sich bekannt und bedürfen keiner weiteren Erläuterung. Es sei lediglich erwähnt, dass der Strahlengang in beiden Teil-Strahlenbündeln, deren Achsen in den Fig. 1 und 2 mit 5 und 6 bezeichnet sind, parallel verläuft.

Zwischen das Frontobjektiv 1 und den Vergrösserungswechsler 2 wird nun erfindungsgemäss ein Stereowinkel-Wechsler 7 mit einem optischen Brechungskörper 8 eingeschaltet. Dieser Brechungskörper 8 kann um 90° geschwenkt werden, um im einen Falle mit planparallelen Stirnseiten 9 rechtwinklig im Strahlengang zu liegen (Fig. 1) oder aber mit planparallelen Paaren von Prismenflächen 10a und 10b bzw. 11a und 11b geneigt in den Teil-Strahlenbündeln zu liegen. In der Position nach Fig. 1 ist der Körper 8 in bezug auf den Verlauf der Achsen der Teil-Strahlenbündel unwirksam. Das Mikroskop weist einen Stereowinkel $\alpha$ von beispielsweise 13° auf. Befindet sich dagegen der optische Körper 8 in der um 90° gekippten Stellung (nach Fig. 2), wird der Abstand dieser Achsen in den beiden Teil-Strahlenbündeln 5 und 6 im Bereich zwischen Körper 8 und Frontobjektiv 1 verkleinert, so dass der Stereowinkel $\alpha$ geringer ausfällt. Wie oben bereits angedeutet, können diese Winkel beispielsweise 13° bzw. 4,5° betragen, doch können natürlich andere bestimmte Werte in den oben erwähnten Bereichen gewählt werden. Auf besondere Vorteile bzw. Anwendungsfälle wird später nochmals eingetreten.

Fig. 3 und 4 zeigen eine konstruktive Ausführung des Stereowechslers 7. In einem Gehäuse 12 mit durchgehender Oeffnung 12a ist ein Rotor als Träger für den optischen Körper 8 drehbar gelagert. Dieser Rotor weist im Bereiche der durchgehenden Oeffnung des Gehäuses 12 eine seitliche Anfräsung 13 auf, welche zwischen Flanschen 14 eine Montagefläche 13a für den Körper 8 bildet. Auf dieser Fläche ist der optische Körper 8 mittels einer elastischen Bride 15 festgeschraubt und zusätzlich gegebenenfalls geklebt. Die Befestigungsschrauben 15a durchsetzen Distanzhülsen 15b, welche die Lage der Bridenenden bestimmen. Der seitlich der Ausfräsung 13 zwischen den Flanschen 14 verbleibende Steg des Rotors weist zwei konische, radiale Bohrungen 16 auf, durch welche die beiden Strahlenbündel durchtreten, wenn sie durch die planparallelen Flächen 9 des um 90° gedrehten optischen Körpers 8 durchtreten (gemäss Fig. 1). Ein in Fig. 4 rechts dargestellter Lagerteil 17 des Rotors ist in einem Lagerflansch 18 drehbar gelagert. Mit einem anschliessenden Achsstummel 19 des Rotors ist ein rechter Betätigungsknopf 29 mittels einer Schraube 20 unter Zwischenlage eines Federrings 21 drehfest verbunden. Zur zusätzlichen Drehsicherung des Betätigungsknopfes 29 auf dem Rotor sind als Anschläge wirkende Schrauben 22 vorgesehen. Ein entsprechender linker Lagerteil 23 des Rotors ist in einer Lagerbüchse 24 gelagert. Mit ihm ist ein Blech 25 verschraubt, welches als Anschlag an der Lagerbüchse 24 die axiale Position des Rotors mitbestimmt. Im Lagerteil 23 sind zwei in Umfangsrichtung um 90° versetzte axiale Nuten 26 vorgesehen, von welchen in Fig. 4 die eine dargestellt ist. In diese Nut greift eine Rastrolle 27, beispielsweise ein Kugellager ein, welches auf einem federbelasteten Hebel 28 gelagert ist. Die Rastrolle 27 bestimmt durch einrasten in je eine der Nuten 26 die beiden Arbeitsstellungen des Rotors bzw. des optischen Körpers 8. Mit dem linken Rotorflansch 14 ist eine Anschlagschraube 30 verschraubt, die mit einer mit dem Gehäuse 12 verschraubten Anschlagschraube 31 zusammenarbeitet. Diese beiden Schrauben verhindern eine Drehung des Rotors und damit des optischen Körpers 8 in die falsche Richtung. Der linke Flansch 14 bildet im übrigen den zweiten Anschlag zur Sicherung des Rotors in bestimmter axialer Position. Auf der linken Seite ist ein gleicher Betätigungsknopf 29 in gleicher Weise wie rechts montiert. Wie nur in Fig. 3 dargestellt, weist das Gehäuse 12 vier in Achsrichtung der Oeffnung 12a bzw. der Strahlenbündel durchgehende Bohrungen 12b auf, durch welche Montageschrauben zur Verbindung der einzelnen Teile des Mikroskops durchgeführt werden können. Hierbei ist es möglich, wahlweise mittels längerer Schrauben das Objektiv und den Stereowinkel-Wechsler oder mittels kurzer Schrauben nur das Objektiv mit dem Vergrösserungswechsler zu verbinden.

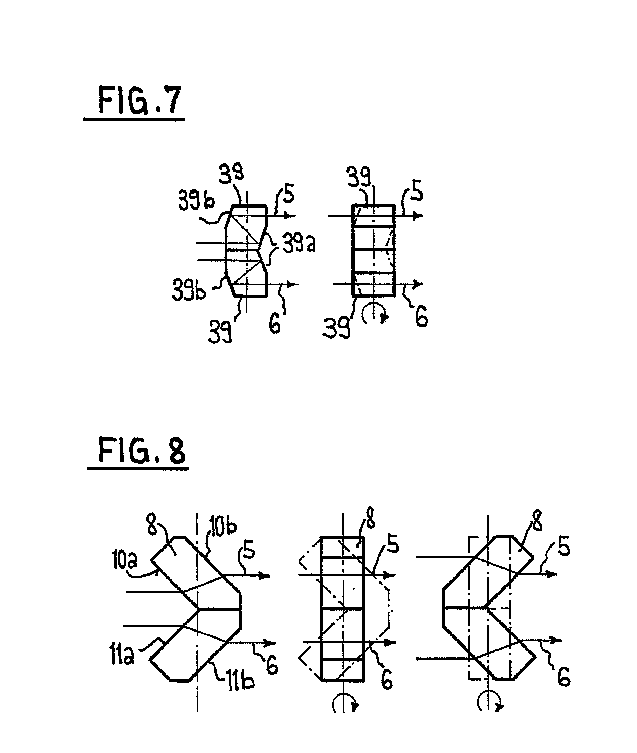

Die Fig. 5 und 6 zeigen schematisch den Strahlengang zwischen dem Frontobjektiv 1 und einem zu untersuchenden Auge 32 mit aufgesetztem Kontaktglas 32a. Fig. 5 zeigt, dass sich bei einem kleinen Stereowinkel α die monokularen Sehfelder der beiden Teil-Strahlenbündel stärker überdecken. Das binokulare Sehfeld 33 ist somit gross wie in Fig. 5 oben angedeutet. Anders liegen die Verhältnisse bei grossem Stereowinkel α, indem das binokulare Sehfeld klein ausfällt, wie Fig. 6 zeigt.

Die Fig. 7 und 8 zeigen Ausführungsvarianten, wobei jede Figur mindestens zwei Arbeitsstellungen zeigt. Die Richtung des Strahldurchgangs ist bei allen Beispielen von links nach rechts angenommen.

Fig. 7 zeigt eine Ausführungsvariante mit Prismen 39, die gemäss Fig. 1 und 2 aus einer wirksamen Stellung gemäss Fig. 7 links in eine unwirksame Stellung gemäss Fig. 7 rechts gedreht werden können. Die Prismen weisen verspiegelte, reflektierende Flächen 39a und 39b auf, über welche die Strahlenbündelachsen 5 und 6 bei wirksamen Prismen nach aussen versetzt werden, so dass sich ein kleiner Stereowinkel ergibt. Gemäss Fig. 7 rechts bleiben die Strahlenbündelachsen 5 und 6 durch die Prismen unbeeinflusst, und es ergibt sich ein grosser Stereowinkel.

Fig. 8 zeigt eine Ausführungsvariante mit einem optischen Prisma oder Körper 8 gemäss Fig. 1 und 2. Der optische Körper ist jedoch etwas anders bemessen und er kann gemäss Fig. 8 in drei verschiedene Stellungen gebracht werden. Die Stellungen in der Mitte und links entsprechen denjenigen nach den Fig. 1 bzw. 2, und es ergeben sich die dort beschriebenen Effekte. Wird der Körper 8 in die umgekehrte Stellung nach Fig. 8 rechts gebracht, werden die Strahlenbündel nicht nach aussen, sondern nach innen gebrochen und es ergibt sich ein grösserer Stereowinkel als bei ungebrochenen Strahlenbündeln gemäss Fig. 8 Mitte. Es lassen sich damit in einfacher Weise drei Stereowinkel wählen.

Zum Abschluss seien einige typische Anwendungsfälle für den kleinen Stereowinkel von beispielsweise 4,5° angegeben. Bei der Untersuchung des Hornhautendothels im Spiegelbezirk ist mit dem normalen Stereomikroskop mit einem Betrachtungswinkel von 13° nur die monokulare Untersuchung möglich. Wird zum kleinen Stereowinkel von 4,5° gewechselt, zeigt sich, dass das Endothel viel besser beobachtet werden kann, nicht nur wegen dem zwar bescheidenen stereoskopischen Effekt, sondern weil die binokulare Sehschärfe des Untersuchers deutlich besser ist als die monokulare. Dieselben Ueberlegungen gelten für die Untersuchung der Linsenhinterfläche bei enger Pupille.

Die seitlichen Partien des Augenhintergrundes werden mit Hilfe des Dreispiegelkontaktglases häufig nur monokular gesehen. Hier ermöglicht die Untersuchung mit dem kleinen Stereowinkel unter Umständen die binokulare Beobachtung eines grösseren Binokularfeldes mit zwar geringerer Stereoskopie, aber besserer binokularer Sehschärfe.

Bei der Untersuchung der Partien um Papille und Macula liefert die Beobachtung unter einem Stereowinkel von 4,5° ein grösseres binokulares Feld. Beim Absuchen von Glaskörper und Fundus kann das von Vorteil sein, besonders bei hoher Myopie, wo das binokulare Feld deutlich kleiner als bei emmetropen Augen ist. Hat man etwas von Interesse gefunden, so wird man auf die Beobachtung mit 13° wechseln, um nach Möglichkeit eine gute stereoskopische Beobachtung des optischen Schnittes zu erreichen.

Aehnliche Ueberlegungen gelten für die Untersuchung und Behandlung im Zusammenhang mit einer Laserbestrahlung am Auge.

Obwohl die Erfindung im vorstehenden hauptsächlich in Bezug auf die Untersuchung des Auges beschrieben ist, können entsprechende Massnahmen bei Mikroskopen für andere Anwendungen von Interesse sein. Dies gilt allgemein für Mikroskope mit grossem Frontabstand, d.h. immer dort, wo die beobachteten Objekte auch behandelt werden sollen und/oder wo Hilfsgeräte zwischen das Mikroskop und das Objekt einzuführen sind.

Bei einem Stereomikroskop ohne Vergrösserungswechsler 2 kann der Stereowechsler 7 vorzugsweise direkt zwischen dem Objektiv von fester oder variabler Vergrösserung und dem Binokulartubus angeordnet sein.

## Patentansprüche

1. Stereo-Mikroskop bzw. Stereowinkel-Wechsler, insbesondere für die Augenuntersuchung, mit schwenkbaren optischen Mitteln (8) zur Veränderung der gegenseitigen Lage der Teil-Strahlenbündelachsen (5, 6) bzw. der Teil-Strahlenbündel und damit zur Veränderung des Stereowinkels (α), dadurch gekennzeichnet, dass die Mittel aus zwei einen Winkel einschliessenden Platten (8, Fig. 1, 2, 8) bestehen, deren brechende, die Teil-Strahlenbündel versetzenden Ein- und Austrittsflächen (10a, 10b, 11a, 11b) paarweise planparallel poliert sind, und dass die Platten (8) auf einem gemeinsamen Rotor fest angeordnet sind, dessen Achse im wesentlichen senkrecht zu den Teil-Strahlenbündelachsen und im wesentlichen parallel zu oder in der durch die Teil-Strahlenbündelachsen definierten Ebene liegt, wobei die Platten (8) je nach Schwenklage des Rotors die Teil-Strahlenbündel unterschiedlich seitlich versetzen.

2. Vorrichtung nach Anspruch 1, dadurch gekennzeichnet, dass nichtbrechende Seitenflächen beider Platten (8) planparallel poliert sind und keinen Einfluss auf die Versetzung der Teil-Strahlenbündel haben, wenn die Platten (8) in eine unwirksame Stellung mit ihren Seitenflächen rechtwinklig zu den Achsen der Teil-Strahlenbündel geschwenkt sind.

3. Stereo-Mikroskop bzw. Stereowinkel-Wechsler, insbesondere für die Augenuntersuchung, mit schwenkbaren optischen Mitteln (39) zur Veränderung der gegenseitigen Lage der Teil-Strahlenbündelachsen (5, 6) bzw. der Teil-Strahlenbündel und damit zur Veränderung des Stereowinkels (α), dadurch gekennzeichnet, dass die Mittel Paare von planparallelen, reflektierenden Flächen (39a, 39b) aufweisen, die auf einem gemeinsamen Rotor fest angeordnet sind, dessen Achse im wesentlichen senkrecht zu den Teil-Strahlenbündelachsen und in der oder parallel zu der durch die Teil-Strahlenbündelachsen definierten Ebene liegt, wobei je nach Schwenklage des Rotors die Mittel (39) die Teil-Strahlenbündel unterschiedlich seitlich versetzen.

4. Vorrichtung nach Anspruch 3, dadurch gekennzeichnet, dass die reflektierenden Flächen an zwei fest mit dem Rotor verbundenen Prismen (39, Fig. 7) gebildet sind, deren nicht-reflektierende Seitenflächen planparallel poliert sind und keinen Einfluss auf die Versetzung der Teil-Strahlenbündel haben, wenn die Prismen (39) in eine unwirksame Stellung mit ihren Seitenflächen rechtwinklig zu den Achsen der Teil-Strahlenbündel geschwenkt sind.

5. Vorrichtung nach einem der Ansprüche 1 bis 4, dadurch gekennzeichnet, dass die Mittel (8, 39) zwischen dem Objektiv (1) und einem Vergrösserungswechsler (2) angeordnet sind.

6. Vorrichtung nach einem der Ansprüche 1 bis 4, dadurch gekennzeichnet, dass die Mittel (8, 39) direkt zwischen dem Objektiv (1), von fester oder variabler Vergrösserung, und dem Binokulartubus (3) angeordnet sind.

7. Vorrichtung nach einem der Ansprüche 1 bis 6, dadurch gekennzeichnet, dass die Mittel (8, 39) im Bereiche von Teil-Strahlenbündeln mit parallelen Achsen (5, 6) angeordnet sind.

8. Vorrichtung nach einem der Ansprüche 1 bis 7, dadurch gekennzeichnet, dass der oder die Körper (8, 39) in entgegengesetzt wirksame Stellungen verstellbar sind, um die Teil-Strahlenbündel mit den Achsen (5, 6) im einen oder anderen Sinne zu versetzen bzw. um den Stereowinkel zu vergrössern oder zu verkleinern (Fig. 8).

9. Vorrichtung nach einem der Ansprüche 1 bis 8, dadurch gekennzeichnet, dass die Mittel (8) mit ihren Verstellorganen in einem besonderen Gehäuseteil (12) oder Modul untergebracht sind.

10. Vorrichtung nach Anspruch 9, dadurch gekennzeichnet, dass der Gehäuseteil (12) oder Modul wahlweise zwischen andere Mikroskopteile einsetzbar ist.

## Claims

1. Stereo-microscope, resp. changer of stereo angle, more particularly for eye inspection, with slewable optical means (8) for changing the mutual position of the axes of the partial beams fo rays (5, 6), resp. the partial beams of rays and with it for changing the stereo angle (α), characterized in that the means consist of two plates (8, Fig. 1, 2, 8) enclosing an angle, the refractive entrance and exit surfaces of which displacing the partial beams of rays being polished, plane and parallel in pairs, and in that the plates (8) are rigidly arranged on a common rotor the axis of which is essentially perpendicular to the axes of the partial beams of rays and essentially parallel to the plane defined by the axes of the beams of rays, or in this plane, the plates (8) displacing laterally the partial beams of rays in a manner different according to the slewed position of the rotor.

2. Device according to claim 1, characterized in that the non refracting lateral faces of both plates (8) are polished, plane and parallel and have no influence on the displacement of the partial beams of rays when the plates (8) are slewed in an ineffective position with their lateral faces perpendicular to the axes of the partial beams of rays.

3. Stereo-microscope, resp. changer of stereo angle, more particularly for eye inspection, with slewable optical means (39) for changing the mutual position of the axes of the partial beams of rays (5, 6), resp. the partial beams of rays and with it for changing the stereo angle (α), characterized in that the means comprise pairs of reflecting, plane and parallel surfaces (39a, 39b) which are rigidly mounted on a common rotor the axis of which is essentially perpendicular to the partial beams of rays and in the plane defined by the axes of the partial beams of rays, or parallel to this plane, the means (39) displacing laterally the partial beams of rays in a manner different according to the slewed position of the rotor.

4. Device according to claim 3, characterized in that the reflecting surfaces are formed on two prisms (39, Fig. 7) rigidly fixed to the rotor, the non reflecting lateral surfaces of which are polished, plane and parallel and have no influence on the displacement of the partial beams of rays when the prisms (39) are slewed in an ineffective position with their lateral faces perpendicular to the axes of the partial beams of rays.

5. Device according to one of the claims 1 to 4, characterized in that the means (8, 39) are arranged between the objective (1) and a changer of magnification (2).

6. Device according to one of the claims 1 to 4, characterized in that the means (8, 39) are arranged directly between the objective (1) of fixed or variable magnification and the binocular tube (3).

7. Device according to one of the claims 1 to 6, characterized in that the means (8, 39) are arranged in the regions of the partial beams of rays with parallel axes (5, 6).

8. Device according to one of the claims 1 to 7, characterized in that the body or the bodies (8, 39) are displaceable in opposed effective positions for displacing in one direction or the other the partial beams of rays with the axes (5, 6) in order to increase or decrease the stereo angle (Fig. 8).

9. Device according to one of the claims 1 to 8, characterized in that the means (8) with their organes of adjustment are mounted in a particular part of the case (12) or module.

10. Device according to claim 9, characterized in that the part of the case (12) or module can be lodged at will between other parts of the microscope.

**Revendications**

1. Stéréomicroscope, resp. changeur d'angle stéréo, plus particulièrement pour l'examen de l'oeil, avec des moyens optiques basculables (8) pour varier la position relative des axes des faisceaux de rayons partiels (5, 6), resp. des faisceaux de rayons partiels et ainsi pour varier l'angle stéréo (α), caractérisé en ce que les moyens consistent en deux plaques (8, Fig. 1, 2, 8) formant un angle, dont les surfaces de réfraction d'entrée et de sortie (10a, 10b, 11a, 11b) déplaçant les faisceaux de rayons partiels sont polies, planes et parallèles par paires, et en ce que les plaques (8) sont disposées rigidement sur un rotor commun dont l'axe est essentiellement perpendiculaire aux axes des faisceaux de rayons partiels et essentiellement parallèle au plan défini par les axes des faisceaux de rayons partiels, ou dans ce plan, les plaques (8) déplaçant latéralement les faisceaux de rayons partiels de manière différente selon la position de basculement du rotor.

2. Dispositif selon la revendication 1, caractérisé en ce que des faces latérales non réfractantes des deux plaques (8) sont polies, planes et parallèles et n'ont aucune influence sur le déplacement des faisceaux de rayons partiels lorsque les plaques (8) sont basculées dans une position inefficace avec leurs faces latérales perpendiculaires aux axes des faisceaux de rayons partiels.

3. Stéréomicroscope, resp. changeur d'angle stéréo, plus particulièrement pour l'examen de l'œil, avec des moyens optiques basculables (39) pour varier la position relative des axes des faisceaux de rayons partiels (5, 6), resp. des faisceaux de rayons partiels et ainsi pour varier l'angle stéréo (α), caractérisé en ce que les moyens comprennent des paires de surfaces (39a, 39b) réfléchissantes, planes et parallèles, qui sont montés rigidement sur un rotor commun, dont l'axe est essentiellement perpendiculaire aux faisceaux de rayons partiels et dans le plan défini par les axes des faisceaux de rayons partiels, ou parallèles à ce plan, les moyens (39) déplaçant latéralement les faisceaux de rayons partiels de manière différente selon la position de basculement du rotor.

4. Dispositif selon la revendication 3, caractérisé en ce que les surfaces réfléchissantes sont formées sur deux prismes (39, fig. 7) fixés rigidement au rotor, dont les surfaces latérales non réfléchissantes sont polies, planes et parallèles et n'ont aucune influence sur le déplacement des faisceaux de rayons partiels lorsque les prismes (39) sont basculés dans une position inefficace avec leurs faces latérales perpendiculaires aux axes des faisceaux de rayons partiels.

5. Dispositif selon l'une des revendications 1 à 4, caractérisé en ce que les moyens (8, 39) sont disposés entre l'objectif (1) et un changeur de grossissement (2).

6. Dispositif selon l'une des revendications 1 à 4, caractérisé en ce que les moyens (8, 39) sont disposés directement entre l'objectif (1) de grossissement fixe ou variable et le tube binoculaire (3).

7. Dispositif selon l'une des revendications 1 à 6, caractérisé en ce que les moyens (8, 39) sont disposés dans les régions des faisceaux de rayons partiels avec axes parallèles (5, 6).

8. Dispositif selon l'une des revendications 1 à 7, caractérisé en ce que le ou les corps (8, 39) sont déplaçables dans des positions efficaces opposées pour déplacer dans un sens ou dans l'autre les faisceaux de rayons partiels avec les axes (5, 6), afin d'augmenter ou de diminuer l'angle stéréo (fig. 8).

9. Dispositif selon l'une des revendications 1 à 8, caractérisé en ce que les moyens (8) avec leurs organes d'ajustement sont montés dans une partie de boîtier particulière ou module (12).

10. Dispositif selon la revendication 9, caractérisé en ce que la partie de boîtier ou module (12) peut être logé au choix entre d'autres parties du microscope.

FIG.1

FIG.2

FIG.5

FIG.6

FIG.3

FIG.4

FIG.7

FIG.8